# EUROPÄISCHE PATENTSCHRIFT

(11) **EP 3 792 113 B1**
(45) Veröffentlichungstag und Bekanntmachung des Hinweises auf die Patenterteilung: **06.07.2022**
(21) Anmeldenummer: 20185134.2
(22) Anmeldetag: 10.07.2020
(51) Int. Cl.: B60R 9/055

(54) **TRANSPORTBOX FÜR EIN KRAFTFAHRZEUG**
TRANSPORT BOX FOR A MOTOR VEHICLE
BOÎTE DE TRANSPORT POUR UN VÉHICULE AUTOMOBILE

(30) Priorität: 10.09.2019 DE 102019213739
(43) Veröffentlichungstag der Anmeldung: 17.03.2021
(73) Patentinhaber: ATERA GmbH, 88299 Leutkirch im Allgäu (DE)
(72) Erfinder: Raida, Hans-Joachim, 42799 Leichlingen (DE)
(74) Vertreter: Patentanwälte Ruff, Wilhelm, Beier, Dauster & Partner mbB

(56) Entgegenhaltungen:
- EP-B1- 2 689 967
- DE-U1-202018 105 176
- US-A1- 2016 010 818

## Beschreibung

Die Erfindung betrifft eine Transportbox gemäß dem Oberbegriff des Anspruch 1.

Eine derartige Transportbox ist aus der EP 2 689 967 B1 bekannt und in Form einer Dachbox für ein Kraftfahrzeug vorgesehen. Bei der bekannten Dachbox weist die Sensoreinrichtung einen Neigungssensor zum Erfassen eines Öffnungswinkels zwischen der Deckelschale und der Grundschale auf. Die Beleuchtungseinrichtung ist in Abhängigkeit des erfassten Öffnungswinkels aktivierbar und/oder deaktivierbar.

Eine weitere Transportbox ist in Form einer Dachbox aus der DE 20 2018 105 176 U1 bekannt und weist eine Grundschale und eine Deckelschale auf. Die Grundschale ist in einem betriebsfertig montierten Zustand an einem Dachbereich eines Personenkraftwagens verankert. Die Deckelschale ist schwenkbeweglich an der Grundschale gelagert und relativ zu der Grundschale zwischen einer Schließstellung und einer Öffnungsstellung verlagerbar. In der Schließstellung liegt die Deckelschale unter Einschluss eines Transportvolumens auf der Grundschale auf. In der Öffnungsstellung ist die Deckelschale unter Öffnung des Transportvolumens wenigstens abschnittsweise von der Grundschale abgehoben. Weiter weist die Dachbox eine Beleuchtungseinrichtung auf, die in dem Transportvolumen angeordnet und zur Beleuchtung desselben eingerichtet ist. Zudem ist eine Sensoreinrichtung vorgesehen und zur Erfassung wenigstens einer Erfassungsgröße eingerichtet. Bei der bekannten Dachbox ist die Sensoreinrichtung zur Erfassung einer Bewegung innerhalb des Transportvolumens eingerichtet und weist zu diesem Zweck einen im Inneren der Dachbox angeordneten Bewegungssensor auf. Alternativ ist die Sensoreinrichtung zur Erfassung einer Beschleunigung der Deckelschale eingerichtet. Bei der bekannten Dachbox ist zudem eine Steuereinrichtung vorgesehen, die zur Aktivierung und/oder Deaktivierung der Beleuchtungseinrichtung in Abhängigkeit der im Inneren der Dachbox erfassten Bewegung oder der Beschleunigung der Deckelschale eingerichtet ist. Dabei soll die Beleuchtungseinrichtung immer dann aktiviert werden, wenn eine Bewegung oder eine Beschleunigung erfasst wird, wie sie üblicherweise bei einem Verlagern der Deckelschale in die Öffnungsstellung auftritt.

Aufgabe der Erfindung ist es, eine Transportbox der eingangs genannten Art bereitzustellen, die einen einfachen Aufbau aufweist und einen energiesparenden Betrieb der Beleuchtungseinrichtung ermöglicht.

Diese Aufgabe wird durch eine Transportbox mit den Merkmalen des Anspruchs 1 gelöst. Durch die erfindungsgemäße Lösung kann insbesondere auf einen Bewegungs- und/oder einen Beschleunigungssensor zur Aktivierung und/oder Deaktivierung der Beleuchtungseinrichtung verzichtet werden. Dabei geht die Erfindung von der Überlegung aus, dass es sowohl bei der Verwendung eines Bewegungssensors zur Erfassung einer Bewegung innerhalb des Transportvolumens als auch bei der Verwendung eines Beschleunigungssensors zur Erfassung der Beschleunigung der Deckelschale zu ungewollten Aktivierungen der Beleuchtungseinrichtung kommen kann. Dies beispielsweise dann, wenn ein in dem Transportvolumen angeordneter Gegenstand fahrzustandsbedingt bewegt wird oder die Deckelschale fahrzustandsbedingten Beschleunigungen ausgesetzt ist. Hierbei kann nicht ohne weiteres festgestellt werden, ob eine solche Bewegung oder eine solche Beschleunigung fahrzustandsbedingt oder tatsächlich durch eine Verlagerung der Deckelschale zwischen der Schließ- und der Öffnungsstellung bedingt ist. Im Ergebnis kann es somit zu fehlerhaften Aktivierungen der Beleuchtungseinrichtung in der Schließstellung der Deckelschale und einem damit einhergehenden ungewollten Energieverbrauch kommen. Durch die erfindungsgemäße Lösung können solche fehlerhaften Aktivierungen und der damit einhergehende Energieverbrauch vermieden werden. Zu diesem Zweck weist die Sensoreinrichtung wenigstens den ersten Neigungssensor auf. Der erste Neigungssensor erfasst die Neigung der Deckelschale in Bezug auf die Lotrichtung. Die Lotrichtung ist die örtliche Richtung des Erdbeschleunigungsvektors. Mit anderen Worten ausgedrückt, ist der erste Neigungssensor zur Erfassung der Neigung der Deckelschale in Bezug auf eine vertikale Bezugsrichtung eingerichtet. Die Neigung der Deckelschale verändert sich naturgemäß bei einer Verlagerung zwischen der Schließ- und der Öffnungsstellung. Die erfasste Neigung der Deckelschale lässt somit einen unmittelbaren Rückschluss auf eine Verlagerungsstellung der Deckelschale relativ zu der Grundschale zu. Die Beleuchtungseinrichtung ist vorzugsweise an einer Innenseite der Deckelschale angeordnet. Die Beleuchtungseinrichtung weist vorzugsweise wenigstens ein Beleuchtungselement auf. Das wenigstens eine Beleuchtungselement ist vorzugsweise als LED-Leuchtelement gestaltet. Die Sensoreinrichtung ist vorzugsweise an der Deckelschale angeordnet. Der erste Neigungssensor ist vorzugsweise an der Deckelschale, bevorzugt an einer Innenseite der Deckelschale, angeordnet. Der erste Neigungssensor kann ein mechanischer oder ein elektronischer Neigungssensor sein. Vorzugsweise ist der erste Neigungssensor in Gestalt eines Neigungsschalters ausgebildet. Neigungsschalter sind als solche grundsätzlich bekannt und zum Schließen und Öffnen eines Stromkreises in Abhängigkeit der erfassten Neigung eingerichtet. Sofern der erste Neigungssensor als Neigungsschalter ausgebildet ist, kann dieser unmittelbar in einen zur Energieversorgung der Beleuchtungseinrichtung vorgesehenen Stromkreis integriert sein. Der Stromkreis kann hierdurch auf einfache Weise in Abhängigkeit der erfassten Neigung geöffnet und/oder geschlossen und somit die Beleuchtungseinrichtung deaktiviert und/oder aktiviert werden. Bei einer solchen Gestaltung kann in vorteilhafter Weise insbesondere auf eine gesonderte Steuereinrichtung zur Ansteuerung der Beleuchtungseinrichtung in Abhängigkeit der erfassten Neigung der Deckelschale verzichtet werden. Alternativ kann der erste Neigungssensor zur Ausgabe wenigstens eines Sensorsignals in Abhängigkeit der erfassten Neigung der Deckelschale eingerichtet sein. Die Beleuchtungseinrichtung kann in Abhängigkeit des Sensorsignals des ersten Neigungssensors aktivier- und/oder deaktivierbar sein. Zu diesem Zweck ist vorzugsweise eine mit dem ersten Neigungssensor und der Beleuchtungseinrichtung verbundene Steuereinrichtung vorgesehen, die zur Ansteuerung der Beleuchtungseinrichtung wenigstens in Abhängigkeit des Sensorsignals des ersten Neigungssensors eingerichtet ist.

Die erfindungsgemäße Lösung eignet sich in besonders vorteilhafter Weise für eine Transportbox in Form einer Dachbox, die zur Montage im Bereich eines Fahrzeugdachs vorgesehen ist. Die erfindungsgemäße Lösung kann aber auch für eine Transportbox in Form einer Heckbox, die zur Montage im Bereich eines Fahrzeughecks vorgesehen ist, verwendet werden.

Weiter gemäß der Erfindung weist die Sensoreinrichtung einen zweiten Neigungssensor auf, der zur Erfassung einer Neigung der Grundschale in Bezug auf die Lotrichtung eingerichtet ist, wobei die Beleuchtungseinrichtung in Abhängigkeit der Neigung der Deckelschale und der Neigung der Grundschale aktivierbar und/oder deaktivierbar ist. Durch diese Ausgestaltung der Erfindung kann einer fehlerhaften Aktivierung und/oder Deaktivierung der Beleuchtungseinrichtung zusätzlich entgegengewirkt werden. Zu diesem Zweck erfolgt die Aktivierung und/oder Deaktivierung der Beleuchtungseinrichtung zusätzlich in Abhängigkeit der mittels des zweiten Neigungssensors erfassten Neigung der Grundschale. Die Beleuchtungseinrichtung kann beispielsweise in Abhängigkeit eines Differenzwerts zwischen der Neigung der Grundschale und der Neigung der Deckelschale angesteuert werden. Vorzugsweise ist zu diesem Zweck eine entsprechend eingerichtete Steuereinrichtung vorgesehen, die mit dem ersten und zweiten Neigungssensor und mit der Beleuchtungseinrichtung verbunden ist. Alternativ können der erste Neigungssensor und der zweite Neigungssensor jeweils als Neigungsschalter gestaltet und zueinander in Reihe geschaltet sein. Hierbei kann der erste Neigungssensor als Öffnungsschalter und der zweite Neigungssensor als Schließschalter gestaltet sein oder umgekehrt. Durch diese Ausgestaltung der Erfindung wird insbesondere vermieden, dass die Beleuchtungseinrichtung bei einer gemeinsamen Neigung der Deckelschale und der Grundschale in der Schließstellung aktiviert wird. Eine solche gemeinsame Neigung kann beispielsweise fahrzustandsbedingt infolge einer starken Neigung des Kraftfahrzeugs oder bei einem Parken des Kraftfahrzeugs in einem stark geneigten Gelände auftreten. Außerdem kann eine solche gemeinsame Neigung beispielsweise dann erfolgen, wenn die Transportbox bei Nichtgebrauch in einem von dem Kraftfahrzeug demontierten Zustand schräggestellt gelagert wird.

In weiterer Ausgestaltung der Erfindung ist der erste Neigungssensor und/oder der zweite Neigungssensor in Form eines mechanischen Neigungsschalters gestaltet. Mechanische Neigungsschalter sind als solche grundsätzlich bekannt. Durch diese Ausgestaltung der Erfindung kann ein besonders einfacher und robuster Aufbau erreicht werden. Zudem erfordern mechanische Neigungsschalter keine elektrische Energieversorgung, so dass ein besonders energiesparender Betrieb erreicht werden kann.

In weiterer Ausgestaltung der Erfindung ist der erste Neigungssensor und/oder der zweite Neigungssensor in Form eines elektronischen Neigungsschalters gestaltet. Elektronische Neigungsschalter sind als solche grundsätzlich bekannt. Durch diese Ausgestaltung der Erfindung kann insbesondere eine kompakte Gestaltung erreicht und Bauraum eingespart werden.

In weiterer Ausgestaltung der Erfindung ist eine weitere Sensoreinrichtung vorgesehen, die zur Erfassung wenigstens einer weiteren Erfassungsgröße eingerichtet und in Abhängigkeit der mittels der Sensoreinrichtung erfassten Neigung der Deckelschale und/oder der Neigung der Grundschale aktivier- und/oder deaktivierbar ist, wobei die Beleuchtungseinrichtung in Abhängigkeit der mittels der weiteren Sensoreinrichtung erfassten weiteren Erfassungsgröße aktivierbar und/oder deaktivierbar ist. Bei dieser Ausgestaltung der Erfindung erfolgt die Ansteuerung der Beleuchtungseinrichtung zur Aktivierung und/oder Deaktivierung in Abhängigkeit der mittels der weiteren Sensoreinrichtung erfassten weiteren Erfassungsgröße. Die weitere Sensoreinrichtung wird wiederum in Abhängigkeit der erfassten Neigung der Deckelschale und/oder der erfassten Neigung der Grundschale aktiviert und/oder deaktiviert. Durch die nur bedarfsweise Aktivierung der weiteren Sensoreinrichtung kann Betriebsenergie eingespart werden. Vereinfacht ausgedrückt erfolgt eine zweistufige Ansteuerung der Beleuchtungseinrichtung. Die weitere Erfassungsgröße kann insbesondere eine Bewegung innerhalb des Transportvolumens, eine Bewegung im Umfeld der Transportbox, eine Beschleunigung der Grundschale oder eine Beschleunigung der Deckelschale sein. Dementsprechend kann die weitere Sensoreinrichtung wenigstens einen Bewegungssensor und/oder Beschleunigungssensor aufweisen. Diese Ausgestaltung der Erfindung ermöglicht insbesondere eine zuverlässige und gleichzeitig energiesparende Ansteuerung der Beleuchtungseinrichtung.

In weiterer Ausgestaltung der Erfindung weist die weitere Sensoreinrichtung wenigstens einen Bewegungssensor auf, der zur Erfassung einer Bewegung innerhalb des Transportvolumens und/oder einer Bewegung im Umfeld der Transportbox eingerichtet ist. Diese Ausgestaltung der Erfindung ermöglicht eine besonders zuverlässige Aktivierung und/oder Deaktivierung der Beleuchtungseinrichtung und wirkt somit einer fehlerhaften Ansteuerung der Beleuchtungseinrichtung zusätzlich entgegen.

In weiterer Ausgestaltung der Erfindung ist ein wiederaufladbarer Energiespeicher zur Versorgung der Beleuchtungseinrichtung und/oder der Sensoreinrichtung und/oder weiteren Sensoreinrichtung mit elektrischer Betriebsenergie vorgesehen. Hierdurch wird ein weiter vereinfachter Aufbau erreicht, da insbesondere auf einen Anschluss der Beleuchtungseinrichtung an ein kraftfahrzeugseitiges Bordnetz zur Energieversorgung verzichtet werden kann. Der wiederaufladbare Energiespeicher weist vorzugsweise wenigstens einen Akkumulator auf. Der Akkumulator ist vorzugsweise zerstörungsfrei entnehmbar gestaltet und kann auf diese Weise bei Bedarf einfach ersetzt werden.

In weiterer Ausgestaltung der Erfindung ist eine mit dem Energiespeicher verbundene Energy-Harvesting-Einrichtung vorgesehen, die wenigstens ein piezoelektrisch wirkendes Piezoelement und/oder ein thermoelektrisch wirkendes Thermoelement aufweist und zur Gewinnung von elektrischer Energie aus einer mechanischen Schwingung und/oder einer Temperaturdifferenz eingerichtet ist. Die Energy-Harvesting-Einrichtung dient einem wenigstens teilweisen Wiederaufladen des Energiespeichers. Hierdurch kann eine erhöhte Einsatzdauer des Energiespeichers erreicht und ein Austausch des Energiespeichers hinausgezögert oder gar vollständig vermieden werden. Zur Gewinnung elektrischer Energie weist die Energy-Harvesting-Einrichtung das wenigstens eine Piezoelement und/oder das wenigstens eine Thermoelement auf. Mittels des Piezoelements können mechanische Schwingungen der Transportbox in elektrische Energie umgesetzt werden. Eine solche Umsetzung erfolgt auf Grundlage grundsätzlich bekannter physikalischer Zusammenhänge. Das wenigstens eine Piezoelement ist vorzugsweise an einer Innenseite der Grundschale und/oder der Deckelschale angeordnet und fest mit dieser verbunden. Die Gewinnung elektrischer Energie mittels des Thermoelements erfolgt auf Grundlage grundsätzlich bekannter physikalischer Zusammenhänge. Vorzugsweise ist das Thermoelement in Gestalt eines Peltier-Elements gestaltet.

In weiterer Ausgestaltung der Erfindung ist ein Funktionsmodul an einer Innenseite der Deckelschale, vorzugsweise lösbar, befestigt, in welches wenigstens die Beleuchtungseinrichtung und die Sensoreinrichtung integriert sind. Hierdurch kann ein nochmals vereinfachter und besonders kompakter Aufbau erreicht werden. Vorzugsweise weist das Funktionsmodul eine Gehäuseanordnung auf, in welche sowohl die Beleuchtungseinrichtung als auch die Sensoreinrichtung integriert sind. Vorzugsweise ist das Funktionsmodul lösbar an der Innenseite der Deckelschale befestigt. Durch die lösbare Befestigung ist gewährleistet, dass das Funktionsmodul in Abhängigkeit eines Beladezustands des Transportvolumens auf einfache Weise in unterschiedlichen Positionen an der Innenseite angeordnet und befestigt werden kann.

In weiterer Ausgestaltung der Erfindung sind zusätzlich der wiederaufladbare Energiespeicher und die Energy-Harvesting-Einrichtung in das Funktionsmodul integriert. Hierdurch kann ein nochmals vereinfachter Aufbau erreicht werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch stark vereinfachter Darstellung eine Ausführungsform einer erfindungsgemäßen Transportbox in Form einer Dachbox, wobei eine Deckelschale der Dachbox eine Öffnungsstellung einnimmt und einzelne Bauteile und/oder Komponenten der Dachbox zur vereinfachten Bezugnahme stark vereinfachend nach Art eines Blockdiagramms dargestellt sind,
- Fig. 2: die Dachbox nach Fig. 1 in einer schematischen Seitenansicht,
- Fig. 3: eine weitere Ausführungsform einer erfindungsgemäßen Dachbox in einer der Fig. 1 entsprechenden schematisch vereinfachten Darstellungsweise und
- Fig. 4: eine weitere Ausführungsform einer erfindungsgemäßen Dachbox in einer den Fig. 1 und 3 entsprechenden schematisch stark vereinfachten Darstellungsweise.

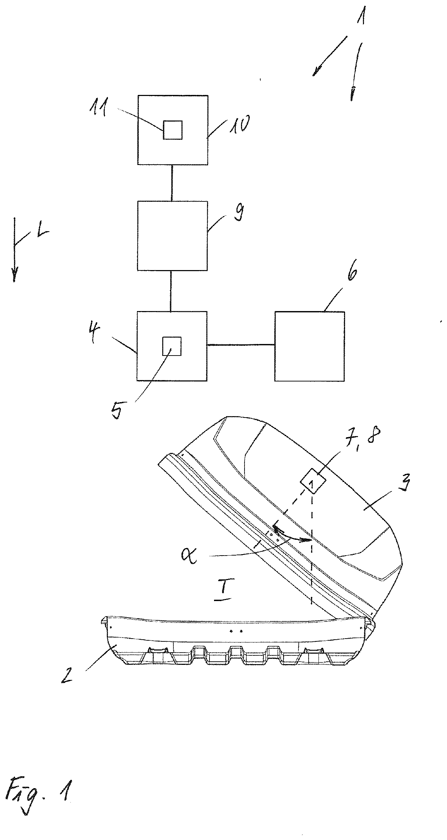

Gemäß Fig. 1 ist eine Transportbox in Form einer Dachbox 1 für ein zeichnerisch nicht näher dargestelltes Kraftfahrzeug in Form eines Personenkraftwagens vorgesehen. Die Dachbox 1 weist eine Grundschale 2 auf, die in einem betriebsfertig montierten Zustand auf grundsätzlich bekannte Weise an einem dachseitig montierten Lastenträger des Personenkraftwagens befestigt ist. Die Dachbox 1 weist zudem eine Deckelschale 3 auf, die auf grundsätzlich bekannte Weise schwenkbeweglich an der Grundschale 2 gelagert ist. Auf diese Weise ist die Deckelschale 3 relativ zu der Grundschale 2 zwischen einer anhand Fig. 1 gezeigten Öffnungsstellung und einer zeichnerisch nicht dargestellten Schließstellung verlagerbar. In der Schließstellung liegt die Deckelschale 3 unter Einschluss eines Transportvolumens T auf der Grundschale 2 auf. Demgegenüber ist die Deckelschale 3 in der Öffnungsstellung relativ zu der Grundschale 2 verschwenkt und somit wenigstens abschnittsweise von der Grundschale 2 abgehoben. Demnach ist das Transportvolumen T in der Öffnungsstellung geöffnet. Die Öffnungsstellung dient insoweit einem Be- und Entladen der Dachbox 1, bei dem zu transportierende Gegenstände in das Transportvolumen T eingebracht bzw. aus diesem entnommen werden.

Bei der gezeigten Ausführungsform ist die Deckelschale 3 um eine - in Bezug auf die Zeichenebene der Fig. 1 - an einem rechten Seitenbereich der Grundschale 2 und der Deckelschale 3 angeordnete Schwenkachse schwenkbeweglich. Mit anderen Worten ausgedrückt ist die Dachbox 1 hierdurch an ihrer linken Längsseite öffenbar. Es versteht sich, dass die Dachbox 1 auf grundsätzlich bekannte Weise zu beiden Längsseiten und somit auch zu ihrer rechten Längsseite hin öffenbar gestaltet sein kann. Hierzu kann die Deckelschale 3 um eine weitere, in einem linken Seitenbereich der Grundschale 2 und der Deckelschale 3 angeordnete Schwenkachse schwenkbeweglich verlagerbar sein.

Bei der gezeigten Ausführungsform ist die Deckelschale 3 mittels nicht näher gezeigter Scharniergelenke auf die vorbeschriebene Weise zwischen der Schließ- und der Öffnungsstellung schwenkbeweglich an der Grundschale 2 gelagert.

Um ein komfortables Be- und Entladen der Dachbox 1 zu gewährleisten, ist eine Beleuchtungseinrichtung 4 vorgesehen. Die Beleuchtungseinrichtung 4 ist anhand Fig. 1 schematisch stark vereinfacht und abseits der Grund- und Deckelschale 2, 3 der Dachbox 1 dargestellt. Dies soll lediglich einer vereinfachten zeichnerischen Darstellung und Bezugnahme dienen. Die Beleuchtungseinrichtung 4 dient einer Beleuchtung des Transportvolumens T, wodurch insbesondere bei dunklen Umgebungsverhältnissen ein komfortables und sicheres Be- und Entladen der Dachbox 1 ermöglicht sein soll.

Bei der gezeigten Ausführungsform weist die Beleuchtungseinrichtung 4 ein Leuchtelement 5 auf. Das Leuchtelement 5 ist - anders als die stark vereinfachte Darstellung der Fig. 1 vermuten lässt - an einer Innenseite der Deckelschale 3 angeordnet, so dass in einem aktivierten Zustand der Beleuchtungseinrichtung 4 das Transportvolumen T und somit das Innere der Dachbox 1 beleuchtet ist.

Bei der gezeigten Ausführungsform ist das Leuchtelement 5 in Form eines LED-Leuchtmittels ausgebildet, wodurch ein besonders energiesparender Betrieb der Beleuchtungseinrichtung 4 erreicht wird.

Die Dachbox 1 weist zudem eine Sensoreinrichtung 6 auf. Die Sensoreinrichtung 6 ist zur gesteuerten Aktivierung und/oder Deaktivierung der Beleuchtungseinrichtung 4 vorgesehen und zu diesem Zweck mit dieser wirkverbunden. Die Sensoreinrichtung 6 ist auf noch näher beschriebene Weise zur Erfassung einer Erfassungsgröße eingerichtet, die in einem Zusammenhang mit der Schließ- und/oder Öffnungsstellung der Deckelschale 3 steht. Mit anderen Worten ausgedrückt ermöglicht die Sensoreinrichtung 6 ein bedarfsgerechtes Aktivieren und Deaktivieren der Beleuchtungseinrichtung 4 in Abhängigkeit der Schließ- und/oder Öffnungsstellung der Deckelschale 3. Somit ist die Beleuchtungseinrichtung 4 und damit auch das Leuchtelement 5 in Abhängigkeit der mittels der Sensoreinrichtung 6 erfassten wenigstens einen Erfassungsgröße und damit in Abhängigkeit der Schließ- und/oder Öffnungsstellung der Deckelschale 3 aktivierbar und/oder deaktivierbar.

Bei der gezeigten Ausführungsform weist die Sensoreinrichtung 6 einen ersten Neigungssensor 7 auf, der zur Erfassung einer Neigung α der Deckelschale 3 in Bezug auf eine Lotrichtung L eingerichtet ist.

Die Lotrichtung L gibt auf bekannte Weise die Richtung des örtlichen Erdschwerevektors an und ist dementsprechend vertikal nach unten gerichtet. Der erste Neigungssensor 7 ist bei der gezeigten Ausführungsform an einer Innenseite der Deckelschale 3 angeordnet und fest mit der Deckelschale 3 verbunden. In der anhand Fig. 1 gezeigten Öffnungsstellung beträgt der Neigungswinkel α der Deckelschale 3 in etwa 45°. Demgegenüber beträgt der Neigungswinkel α in der nicht gezeigten Schließstellung in etwa 0°.

Es versteht sich, dass der erste Neigungssensor nicht zwingend an der Innenseite der Deckelschale angeordnet sein muss. Dementsprechend ist der erste Neigungssensor bei einer nicht gezeigten Ausführungsform an einem der Deckelschale zugeordneten Scharniergelenk angeordnet, das die Schwenkbeweglichkeit der Deckelschale zwischen der Schließ- und der Öffnungsstellung gewährleistet. Bei dieser nicht gezeigten Ausführungsform erfolgt die Erfassung der Neigung der Deckelschale somit mittelbar über eine Erfassung der Neigung des besagten Scharniergelenks.

Bei der gezeigten Ausführungsform ist der erste Neigungssensor 7 in Form eines elektronischen Neigungsschalters 8 gestaltet. Elektronische Neigungsschalter sind als solche grundsätzlich bekannt und zum Schalten eines Stromkreises in Abhängigkeit der erfassten Neigung eingerichtet. Vorliegend kann hierdurch ein zeichnerisch nicht näher dargestellter Stromkreis zur Versorgung der Beleuchtungseinrichtung 4 und/oder des Leuchtelements 5 mittels des elektronischen Neigungsschalters 8 in Abhängigkeit der erfassten Neigung α geschaltet werden. Bei der gezeigten Ausführungsform ist der elektronische Neigungsschalter 8 derart eingerichtet, dass ein Schalten bei Erreichen einer Neigung α von 40° erfolgt. Es versteht sich, dass dieser Wert der Neigung α als rein exemplarisch zu verstehen und dementsprechend bei einer nicht gezeigten Ausführungsform hiervon abweichend bemessen ist.

Wird die Deckelschale 3 ausgehend von der Schließstellung relativ zu der Grundschale 2 in Richtung der Öffnungsstellung verschwenkt, schließt der elektronische Neigungsschalter 8 den Stromkreis zur Energieversorgung der Beleuchtungseinrichtung 4 bei Erreichen der Neigung α von 40° und bei einer hierzu entgegengesetzten Verlagerung der Deckelschale 3 in Richtung der Schließstellung öffnet der elektronische Neigungsschalter 8 den Stromkreis dementsprechend. Hierdurch kann eine einfache und bedarfsgerechte Aktivierung und Deaktivierung der Beleuchtungseinrichtung 4 in Abhängigkeit der Neigung α erfolgen.

Sofern der Stromkreis zur Versorgung der Beleuchtungseinrichtung 4 und/oder des Leuchtelements 5 und/oder der Sensoreinrichtung 6 eine elektrische Energieübertragung zwischen der Grundschale 2 und der Deckelschale 3 erfordert, kann eine hierfür notwendige elektrische Kontaktierung zwischen der Grundschale 2 und der Deckelschale 3 über die vorbeschriebenen Scharniergelenke erfolgen. Die Scharniergelenke sind zu diesem Zweck elektrisch leitfähig gestaltet, so dass auf eine gesonderte elektrische Verkabelung in diesem Bereich verzichtet werden kann.

Zur Versorgung der Beleuchtungseinrichtung 4 mit elektrischer Betriebsenergie ist vorliegend ein wiederaufladbarer Energiespeicher 9 vorgesehen. Der wiederaufladbare Energiespeicher 9 kann zudem zur Energieversorgung der Sensoreinrichtung 6 eingerichtet sein. Der Energiespeicher 9 ist bei der gezeigten Ausführungsform ein Akkumulator mit grundsätzlich bekannter Bauform.

Bei einer nicht gezeigten Ausführungsform ist zur Energieversorgung der Beleuchtungseinrichtung und/oder der Sensoreinrichtung anstelle des wiederaufladbaren Energiespeichers eine Verbindung mit einem kraftfahrzeugseitigen Bordnetz vorgesehen.

Bei einer weiteren nicht gezeigten Ausführungsform ist anstelle des wiederaufladbaren Energiespeichers eine konventionelle, nicht wiederaufladbare Batterie vorgesehen.

Zum Wiederaufladen des Energiespeichers 9 weist die Dachbox 1 bei der gezeigten Ausführungsform zudem eine Energy-Harvesting-Einrichtung 10 auf. Die Energy-Harvesting-Einrichtung 10 dient einer Gewinnung von elektrischer Energie aus der Umgebung und weist zu diesem Zweck vorliegend ein piezoelektrisch wirkendes Piezoelement 11 auf. Mittels des Piezoelements 11 können mechanische Schwingungen in elektrische Energie umgewandelt werden. Die hierfür maßgeblichen physikalischen Zusammenhänge sind grundsätzlich bekannt. Das Piezoelement 11 ist vorliegend - anders als es die stark vereinfachte Darstellung der Fig. 1 vermuten lässt - an einer Innenseite der Deckelschale 3 angeordnet und fest mit dieser verbunden. Im Fahrbetrieb des Kraftfahrzeugs auftretende mechanische Schwingungen der Deckelschale 3 können somit mittels des Piezoelements 11 in elektrische Energie zum Aufladen des Energiespeichers 9 umgewandelt werden.

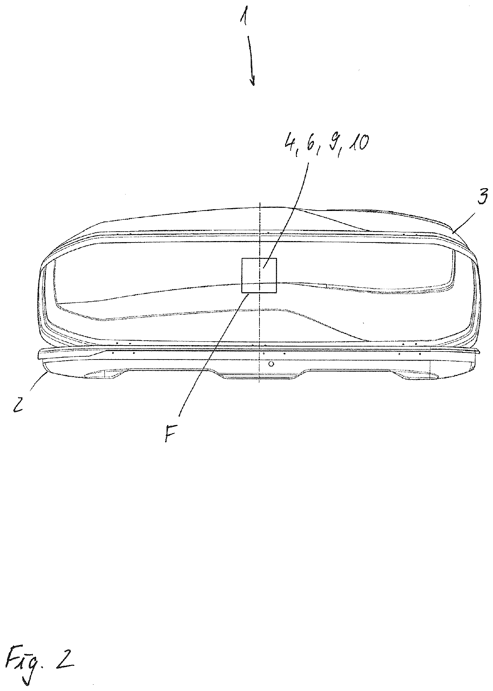

Wie anhand Fig. 2 gezeigt ist, sind die Beleuchtungseinrichtung 4, die Sensoreinrichtung 6, der wiederaufladbare Energiespeicher 9 und die Energy-Harvesting-Einrichtung 10 bei der gezeigten Ausführungsform in ein Funktionsmodul F integriert. Das Funktionsmodul F ist lösbar an einer Innenseite der Deckelschale 3 befestigt. Das Funktionsmodul F ist anhand Fig. 2 schematisch stark vereinfacht dargestellt und weist eine nicht näher gezeigte Gehäuseanordnung auf, in welche die Beleuchtungseinrichtung 4, die Sensoreinrichtung 6, der Energiespeicher 9 und die Energy-Harvesting-Einrichtung 10 integriert sind. Die auf diese Weise erreichte Gestaltung ist kompakt und erfordert insbesondere keine feste Verkabelung mit der Deckelschale 3 und/oder der Grundschale 2. Hierdurch kann das Funktionsmodul F auf einfache Weise an der Deckelschale 3 montiert und von dieser demontiert werden.

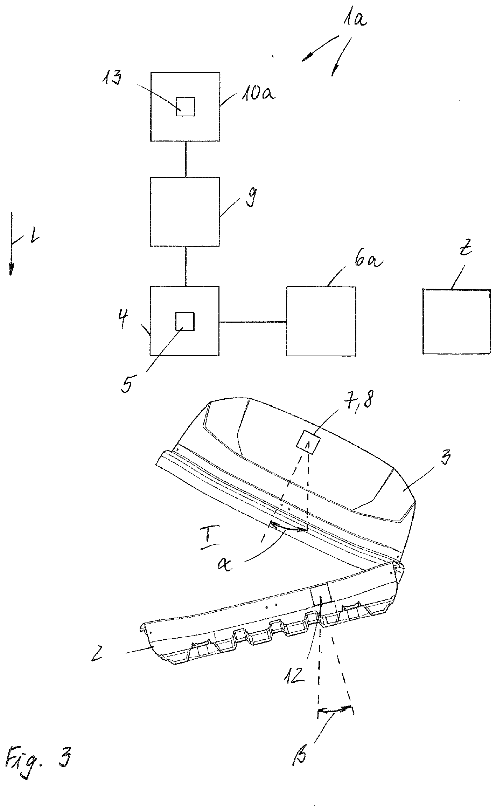

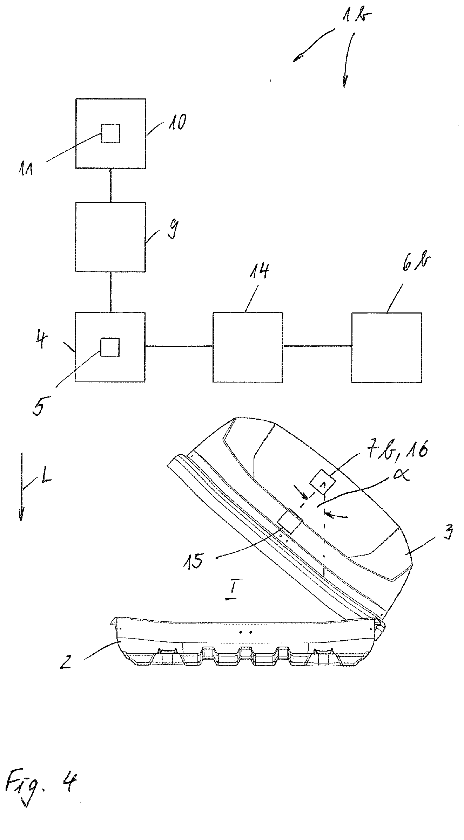

Anhand der Fig. 3 und 4 sind weitere Ausführungsformen erfindungsgemäßer Dachboxen 1a, 1b gezeigt. Die Ausführungsformen nach den Fig. 3 und 4 stimmen im Wesentlichen mit der Ausführungsform nach den Fig. 1 und 2 überein. Zur Vermeidung von Wiederholungen wird nachfolgend nur auf wesentliche Unterschiede eingegangen. Bauteile und/oder Abschnitte mit identischer Gestaltung und/oder Funktion sind mit identischen Bezugszeichen versehen und werden nicht gesondert erläutert. Stattdessen wird auf die diesbezügliche Offenbarung im Zusammenhang mit der Ausführungsform nach den Fig. 1 und 2 verwiesen, die in entsprechender Weise für die Ausführungsformen nach den Fig. 3 und 4 gelten.

Im Unterschied zu der Dachbox 1 nach den Fig. 1 und 2 weist die Dachbox 1a nach Fig. 3 eine Sensoreinrichtung 6a mit einem zusätzlichen zweiten Neigungssensor 12 auf. Der zweite Neigungssensor 12 ist zur Erfassung einer Neigung β der Grundschale 2 in Bezug auf die Lotrichtung L eingerichtet. Der zweite Neigungssensor 12 ist zu diesem Zweck an einer Innenseite der Grundschale 2 angeordnet und fest mit dieser verbunden. Die Ansteuerung der Beleuchtungseinrichtung 4 zur Aktivierung und/oder Deaktivierung erfolgt somit vorliegend nicht lediglich in Abhängigkeit der mittels des ersten Neigungssensors 7 erfassten Neigung α der Deckelschale 3. Vielmehr erfolgt die Ansteuerung zusätzlich in Abhängigkeit der Neigung β der Grundschale 2. Hierdurch können insbesondere ungewollte Aktivierungen der Beleuchtungseinrichtung 4 bei einer gemeinsamen Neigung der Grundschale 2 und der Deckelschale 3 in der Schließstellung vermieden werden. Eine solche gemeinsame Neigung kann beispielsweise bei einer starken Neigung des Kraftfahrzeugs im Fahrbetrieb oder im parkierten Zustand auftreten.

Der zweite Neigungssensor 12 ist vorliegend baugleich zu dem ersten Neigungssensor 7 und insoweit als elektronischer Neigungsschalter gestaltet. Die Ansteuerung der Beleuchtungseinrichtung 5 erfolgt somit in Abhängigkeit des Schaltzustands des ersten Neigungssensors 7 und des Schaltzustands des zweiten Neigungssensors 12. Zur Verarbeitung dieser Schaltzustände ist bei der gezeigten Ausführungsform eine nicht näher ersichtliche Steuereinrichtung vorgesehen. Die Steuereinrichtung ist der Sensoreinrichtung 6a zugeordnet und zur Aktivierung und/oder Deaktivierung der Beleuchtungseinrichtung 4 in Abhängigkeit der Schaltzustände der Neigungssensoren 7, 12 und damit der mittels dieser erfassten Neigungen α, β eingerichtet. Dabei ist die Steuereinrichtung vereinfacht ausgedrückt derart eingerichtet, dass die Beleuchtungseinrichtung 4 in Abhängigkeit eines vorgegebenen Differenzwerts zwischen der Neigung α der Deckelschale 3 und der Neigung β der Grundschale 2 aktivierbar und/oder deaktivierbar ist.

Weiter im Unterschied zu der Dachbox 1 weist die Dachbox 1a nach Fig. 3 eine unterschiedlich gestaltete Energy-Harvesting-Einrichtung 10a auf. Die Energy-Harvesting-Einrichtung 10a weist anstelle eines Piezoelements ein thermoelektrisch wirkendes Thermoelement 13 auf. Mittels des Thermoelements 13 kann elektrische Energie aus einer vorherrschenden Temperaturdifferenz gewonnen werden. Die hierfür maßgeblichen physikalischen Zusammenhänge sind grundsätzlich bekannt. Die Temperaturdifferenz kann entweder in der die Dachbox 1a umgebenden Umgebungsluft oder an Bauteilen und/oder Abschnitten der Dachbox 1a selbst vorherrschen.

Weiter im Unterschied zu der Dachbox 1 weist die Dachbox 1a eine Zeitschalteinrichtung Z auf, mittels derer die Beleuchtungseinrichtung 4 bei Erreichen einer vorgegebenen Einschaltdauer automatisch abschaltbar ist. Die Zeitschalteinrichtung Z kann hierzu mit einem zur Stromversorgung der Beleuchtungseinrichtung 4 vorgesehenen Stromkreis wirkverbunden sein und diesen bei Erreichen der Einschaltdauer unterbrechen.

Die Dachbox 1b nach Fig. 4 unterscheidet sich im Wesentlichen durch das Vorhandensein einer weiteren Sensoreinrichtung 14 von den Ausführungsformen nach den Fig. 1 bis 3. Die weitere Sensoreinrichtung 14 weist einen Bewegungssensor 15 auf, der zur Erfassung einer Bewegung innerhalb des Transportvolumens T eingerichtet ist. Der Bewegungssensor 15 ist hierzu an einer Innenseite der Deckelschale 3 angeordnet und fest mit dieser verbunden. Die Beleuchtungseinrichtung 4 ist in Abhängigkeit einer mittels des Bewegungssensors 15 erfassten Bewegung aktivierbar und/oder deaktivierbar.

Dabei erfolgt die Versorgung der weiteren Sensoreinrichtung 14 und damit auch des Bewegungssensors 15 vorliegend über den wiederaufladbaren Energiespeicher 9.

Um einen möglichst energiesparenden Betrieb der weiteren Sensoreinrichtung 14 zu erreichen, wird diese lediglich bedarfsweise aktiviert und/oder deaktiviert. Diese Aktivierung und/oder Deaktivierung erfolgt vorliegend in Abhängigkeit der mittels der Sensoreinrichtung 6b erfassten Neigung α der Deckelschale 3.

Im Unterschied zu den Sensoreinrichtungen 6, 6a weist die Sensoreinrichtung 6b einen ersten Neigungssensor 7b auf, der in Form eines mechanischen Neigungsschalters 16 gestaltet ist. Mechanische Neigungsschalter sind als solche grundsätzlich bekannt. Mittels des mechanischen Neigungsschalters 16 wird vorliegend ein nicht näher gezeigter und zur Energieversorgung des Bewegungssensors 15 vorgesehener Stromkreis in Abhängigkeit der Neigung α der Deckelschale 3 geöffnet und geschlossen. Dabei ist der mechanische Neigungsschalter 16 derart eingerichtet, dass die Stromversorgung in der Schließstellung unterbrochen und bei Erreichen eines vorgegebenen Werts der Neigung α geschlossen ist.

Es versteht sich, dass die Merkmale der Ausführungsformen zu nicht ausdrücklich beschriebenen und/oder zeichnerisch dargestellten Merkmalskombinationen kombiniert werden können.

## Patentansprüche

1. Transportbox (1, 1a,1b), insbesondere Dachbox, für ein Kraftfahrzeug, aufweisend eine Grundschale (2), die in einem betriebsfertig montierten Zustand fahrzeugfest angeordnet ist, eine Deckelschale (3), die schwenkbeweglich an der Grundschale (2) gelagert und relativ zu der Grundschale (2) verlagerbar ist zwischen einer Schließstellung, in welcher die Deckelschale (3) unter Einschluss eines Transportvolumens (T) auf der Grundschale (2) aufliegt, und einer Öffnungsstellung, in welcher die Deckelschale (3) unter Öffnung des Transportvolumens (T) wenigstens abschnittsweise von der Grundschale (2) abgehoben ist, eine Beleuchtungseinrichtung (4), die zur Beleuchtung des Transportvolumens (T) eingerichtet ist, und aufweisend eine mit der Beleuchtungseinrichtung (4) verbundene Sensoreinrichtung (6, 6a, 6b), die zur Erfassung wenigstens einer Erfassungsgröße eingerichtet ist, wobei die Beleuchtungseinrichtung (4) in Abhängigkeit der mittels der Sensoreinrichtung (6, 6a, 6b) erfassten wenigstens einen Erfassungsgröße aktivierbar und/oder deaktivierbar ist, wobei die Sensoreinrichtung (6, 6a, 6b) wenigstens einen ersten Neigungssensor (7, 7b) aufweist, der zur Erfassung einer Neigung (α) der Deckelschale (3) in Bezug auf eine Lotrichtung (L) eingerichtet ist, und wobei die Beleuchtungseinrichtung (4) in Abhängigkeit der erfassten Neigung (α) der Deckelschale (3) aktivierbar und/oder deaktivierbar ist, **dadurch gekennzeichnet, dass** die Sensoreinrichtung (6a) einen zweiten Neigungssensor (12) aufweist, der zur Erfassung einer Neigung (β) der Grundschale (2) in Bezug auf die Lotrichtung (L) eingerichtet ist, wobei die Beleuchtungseinrichtung (4) in Abhängigkeit der Neigung (α) der Deckelschale (3) und der Neigung (β) der Grundschale (2) aktivierbar und/oder deaktivierbar ist.

2. Transportbox (1, 1a, 1b) nach Anspruch 1, **dadurch gekennzeichnet, dass** der erste Neigungssensor (7, 7b) und/oder der zweite Neigungssensor (12) in Form eines mechanischen Neigungsschalters (16) gestaltet ist.

3. Transportbox (1, 1a, 1b) nach Anspruch 1 oder 2, **dadurch gekennzeichnet, dass** der erste Neigungssensor (7, 7b) und/oder der zweite Neigungssensor (12) in Form eines elektronischen Neigungsschalters (8) gestaltet ist.

4. Transportbox (1b) nach einem der vorhergehenden Ansprüche, **dadurch gekennzeichnet, dass** eine weitere Sensoreinrichtung (14) vorgesehen ist, die zur Erfassung wenigstens einer weiteren Erfassungsgröße eingerichtet und in Abhängigkeit der mittels der Sensoreinrichtung (6b) erfassten Neigung (α) der Deckelschale (3) und/oder Neigung (β) der Grundschale (2) aktivierbar und/oder deaktivierbar ist, wobei die Beleuchtungseinrichtung (4) in Abhängigkeit der mittels der weiteren Sensoreinrichtung (14) erfassten weiteren Erfassungsgröße aktivierbar und/oder deaktivierbar ist.

5. Transportbox (1b) nach Anspruch 4, **dadurch gekennzeichnet, dass** die weitere Sensoreinrichtung (14) wenigstens einen Bewegungssensor (15) aufweist, der zur Erfassung einer Bewegung innerhalb des Transportvolumens (T) und/oder einer Bewegung im Umfeld der Transportbox (1b) eingerichtet ist.

6. Transportbox (1, 1a, 1b) nach einem der vorhergehenden Ansprüche, **dadurch gekennzeichnet, dass** ein wiederaufladbarer Energiespeicher (9) zur Versorgung der Beleuchtungseinrichtung (4) und/oder der Sensoreinrichtung (6, 6a, 6b) und/oder der weiteren Sensoreinrichtung (14) mit elektrischer Betriebsenergie vorgesehen ist.

7. Transportbox (1, 1a, 1b) nach Anspruch 6, **dadurch gekennzeichnet, dass** eine mit dem Energiespeicher (9) verbundene Energy-Harvesting-Einrichtung (10, 10a) vorgesehen ist, die wenigstens ein piezoelektrisch wirkendes Piezoelement (11) und/oder ein thermoelektrisch wirkendes Thermoelement (13) aufweist und zur Gewinnung von elektrischer Energie aus einer mechanischen Schwingung und/oder einer Temperaturdifferenz eingerichtet ist.

8. Transportbox (1, 1a, 1b) nach einem der vorhergehenden Ansprüche, **dadurch gekennzeichnet, dass** ein Funktionsmodul (F) an einer Innenseite der Deckelschale (3), vorzugsweise lösbar, befestigt ist, in welches wenigstens die Beleuchtungseinrichtung (4) und die Sensoreinrichtung (6, 6a, 6b) integriert sind.

9. Transportbox (1, 1a, 1b) nach Anspruch 8, **dadurch gekennzeichnet, dass** zusätzlich der wiederaufladbare Energiespeicher (9) und die Energy-Harvesting-Einrichtung (10, 10a) in das Funktionsmodul (F) integriert sind.

## Claims

1. Cargo box (1, 1a, 1b), in particular a roof box, for a motor vehicle, having a base shell (2) arranged firmly on the vehicle in an assembled state ready for operation; a lid shell (3) mounted swivelably on the base shell (2) and movable relative to the base shell (2) between a closed position in which the lid shell (3) rests on the base shell (2) to enclose a transport volume (T), and an open position in which the lid shell (3) is lifted at least in some sections from the base shell (2) to open the transport volume (T); an illumination device (4) configured to illuminate the transport volume (T) and having a sensor device (6, 6a, 6b) connected to the illumination device (4) and configured to detect at least one detection variable, the illumination device (4) being activatable and/or deactivatable depending on the at least one detection variable detected by means of the sensor device (6, 6a, 6b), the sensor device (6, 6a, 6b) having at least one first inclination sensor (7, 7b) configured to detect an inclination (α) of the lid shell (3) relative to a vertical direction (L), and the illumination device (4) being activatable and/or deactivatable depending on the detected inclination (α) of the lid shell (3), **characterized in that** the sensor device (6a) has a second inclination sensor (12) configured to detect an inclination (β) of the base shell (2) relative to the vertical direction (L), the illumination device (4) being activatable and/or deactivatable depending on the inclination (α) of the lid shell (3) and the inclination (β) of the base shell (2).

2. Cargo box (1, 1a,1b) according to claim 1, **characterized in that** the first inclination sensor (7, 7b) and/or the second inclination sensor (12) is/are designed in the form of a mechanical inclination switch (16).

3. Cargo box (1, 1a, 1b) according to claim 1 or 2, **characterized in that** the first inclination sensor (7, 7b) and/or the second inclination sensor (12) is/are designed in the form of an electronic inclination switch (8).

4. Cargo box (1b) according to any of the preceding claims, **characterized in that** a further sensor device (14) is provided which is configured to detect at least one further detection variable and is activatable and/or deactivatable depending on the inclination (α) of the lid shell (3) detected by means of the sensor device (6b) and/or on the inclination (β) of the base shell (2), the illumination device (4) being activatable and/or deactivatable depending on the further detection variable detected by means of the further sensor device (14).

5. Cargo box (1b) according to claim 4, **characterized in that** the further sensor device (14) has at least one movement sensor (15) configured to detect a movement inside the transport volume (T) and/or a movement in the vicinity of the cargo box (1b).

6. Cargo box (1, 1a, 1b) according to any of the preceding claims, **characterized in that** a rechargeable energy storage device (9) is provided for supplying electrical operating energy to the illumination device (4) and/or to the sensor device (6, 6a, 6b) and/or to the further sensor device (14).

7. Cargo box (1, 1a, 1b) according to claim 6, **characterized in that** an energy-harvesting device (10, 10a) connected to the energy storage device (9) is provided that has at least one piezoelectrically acting piezoelement (11) and/or a thermoelectrically acting thermocouple (13) and is configured to generate electrical energy from a mechanical vibration and/or from a temperature difference.

8. Cargo box (1, 1a, 1b) according to any of the preceding claims, **characterized in that** a function module (F), into which at least the illumination device (4) and the sensor device (6, 6a, 6b) are integrated, is fastened to an inner face of the lid shell (3), preferably detachably.

9. Cargo box (1, 1a, 1b) according to claim 8, **characterized in that** the rechargeable energy storage device (9) and the energy-harvesting device (10, 10a) are additionally integrated into the function module (F).

## Revendications

1. Boîte de transport (1, 1a,1b), notamment coffre de toit, pour un véhicule automobile, présentant une coque principale (2) qui est disposée fixée au véhicule dans un état monté prêt à l'emploi, une coque couvercle (3) qui est montée de manière pivotante sur la coque principale (2) et déplaçable par rapport à la coque principale (2), entre une position de fermeture dans laquelle la coque couvercle (3), y compris un volume transporté (T), repose sur la coque principale (2), et une position d'ouverture dans laquelle la coque couvercle (3) à l'ouverture du volume transporté (T) est soulevée de la coque principale (2) au moins par sections, un dispositif d'éclairage (4) qui est configuré pour éclairer le volume transporté (T), et présentant un dispositif à capteur (6, 6a, 6b) relié au dispositif d'éclairage (4) qui est configuré pour détecter au moins une grandeur de détection, sachant que le dispositif d'éclairage (4) est activable et/ou désactivable en fonction d'au moins la grandeur de détection détectée au moyen du dispositif à capteur (6, 6a, 6b), sachant que le dispositif à capteur (6, 6a, 6b) présente au moins un premier capteur d'inclinaison (7, 7b) qui est configuré pour détecter une inclinaison (α) de la coque couvercle (3) concernant une direction verticale (L), et sachant que le dispositif d'éclairage (4) est activable et/ou désactivable selon l'inclinaison détectée (α) de la coque couvercle (3), **caractérisée en ce que** le dispositif à capteur (6a) présente un second capteur d'inclinaison (12) qui est configuré pour détecter une inclinaison (β) de la coque principale (2) concernant la direction verticale (L), sachant que le dispositif d'éclairage (4) est activable et/ou désactivable selon l'inclinaison (α) de la coque couvercle (3) et de l'inclinaison (β) de la coque principale (2).

2. Boîte de transport (1, 1a, 1b) selon la revendication 1, **caractérisée en ce que** le premier capteur d'inclinaison (7, 7b) et/ou le second capteur d'inclinaison (12) est conçu sous forme de contacteur d'inclinaison mécanique (16).

3. Boîte de transport (1, 1a, 1b) selon la revendication 1 ou 2, **caractérisée en ce que** le premier capteur d'inclinaison (7, 7b) et/ou le second capteur d'inclinaison (12) est conçu sous forme de contacteur d'inclinaison électronique (8).

4. Boîte de transport (1b) selon une des revendications précédentes, **caractérisée en ce qu'**est prévu un autre dispositif à capteur (14) qui est configuré pour détecter au moins une autre grandeur de détection et est activable et/ou désactivable selon l'inclinaison (α) de la coque couvercle (3) et/ou l'inclinaison (β) de la coque principale (2), détectées au moyen du dispositif à capteur (6b), sachant que le dispositif d'éclairage (4) est activable et/ou désactivable en fonction de l'autre grandeur de détection détectée au moyen de l'autre dispositif à capteur (14).

5. Boîte de transport (1b) selon la revendication 4, **caractérisée en ce que** l'autre dispositif à capteur (14) présente au moins un capteur de mouvement (15) qui est configuré pour détecter un mouvement à l'intérieur du volume transporté (T) et/ou un mouvement aux environs de la boîte de transport (1b).

6. Boîte de transport (1, 1a, 1b) selon une des revendications précédentes, **caractérisée en ce qu'**un accumulateur d'énergie (9) rechargeable est prévu pour alimenter en énergie électrique de fonctionnement le dispositif d'éclairage (4) et/ou le dispositif à capteur (6, 6a, 6b) et/ou l'autre dispositif à capteur (14).

7. Boîte de transport (1, 1a, 1b) selon la revendication 6, **caractérisée en ce qu'**est prévu un récupérateur d'énergie (10, 10a) relié à l'accumulateur d'énergie (9) qui présente au moins un élément à effet piézoélectrique (11) et/ou un élément à effet thermoélectrique (13) et est configuré pour produire de l'énergie électrique à partir d'une vibration mécanique et/ou d'une différence de température.

8. Boîte de transport (1, 1a, 1b) selon une des revendications précédentes, **caractérisée en ce qu'**un module fonctionnel (F) est fixé, de préférence de manière amovible, sur un côté intérieur de la coque couvercle (3), dans lequel sont intégrés au moins le dispositif d'éclairage (4) et le dispositif à capteur (6, 6a, 6b).

9. Boîte de transport (1, 1a, 1b) selon la revendication 8, **caractérisée en ce qu'**en plus, l'accumulateur d'énergie rechargeable (9) et le récupérateur d'énergie (10, 10a) sont intégrés au module fonctionnel (F).
